# EUROPEAN PATENT APPLICATION

(11) **EP 4 089 901 A1**
(43) Date of publication of application: **16.11.2022**
(21) Application number: 22173059.1
(22) Date of filing: 12.05.2022
(51) Int. Cl.: H02M 1/00, H02M 3/158, H02M 7/162, H02M 1/15

(54) **AC-DC POWER CONVERTER**

(30) Priority: 14.05.2021 CN 202110528172
(71) Applicant: Silergy Semiconductor Technology (Hangzhou) Ltd, Zhejiang 310051 (CN)
(72) Inventor: LUO, Nan, Hangzhou, 310051 (CN); HUANG, Qiukai, Hangzhou, 310051 (CN)
(74) Representative: Ström & Gulliksson AB

(57) **Abstract**

An AC-DC power converter and a conversion method for the AC-DC power converter are provided. A DC bus voltage can meet input voltage requirements of a subsequently connected DC converter by means of a bidirectional DC converter connected to a rectifier circuit, to increase a time interval for which the AC input power supply provides power to the subsequently connected DC converter, and reduce the requirements for capacity and a volume of a first capacitor in the rectifier circuit and capacity and a volume of a second capacitor connected to the second end of the bidirectional DC converter, so that a total volume of the capacitors connected at the subsequent stage of the rectifier bridge can be greatly reduced, to reduce a volume of the power converter, thereby improving the power density of the power converter.

## Description

### FIELD

The present disclosure relates to the technical field of power electronics, and in particular, to an alternating current-direct current (AC-DC) power converter and a conversion method for the AC-DC power converter.

### BACKGROUND

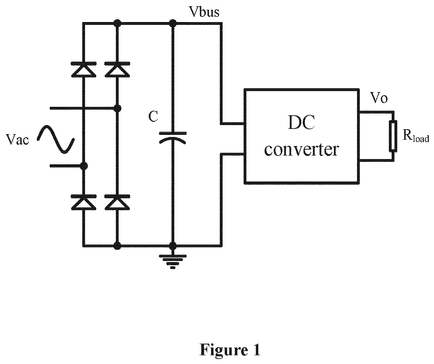

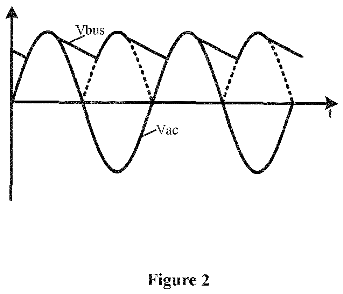

Currently, an AC-DC power converter without Power Factor Correction (PFC) normally adopts a two-stage framework. As shown in Figure 1, a front-stage rectifier bridge rectifies an alternating current (AC) voltage Vac into a direct current (DC) bus voltage Vbus, a rear-stage DC converter converts the DC bus voltage Vbus into a required voltage level as an output voltage Vo for a load R_{load}. In such case, the DC bus voltage Vbus rectified by the front-stage rectifier bridge is required to be within a range to ensure that the rear-stage DC converter normally operates. Reference is made to Figure 2, which is a diagram showing an operation waveform of an AC-DC power converter.

Therefore, an output end of the rectifier bridge normally requires a capacitor C with a large capacitance to meet requirements of the DC bus voltage under a low AC input voltage and full-load, and the output end of the rectifier bridge further requires a capacitor C with a high withstand voltage to meet requirements of the withstand voltage under a high AC input voltage. The volume of the capacitor C connected at a subsequent stage of the rectifier bridge is large due to the requirements of the large capacitance and the high withstand voltage, which eventually leads to a large volume of the converter, and reduces a power density of the AC-DC power converter.

### SUMMARY

In view of this, an AC-DC power converter and a conversion method for the AC-DC power converter are provided according to the present disclosure, to solve the problem that the power density of the conventional AC-DC power converter is low.

An AC-DC power converter is provided according to the present disclosure. The AC-DC power converter includes:
a rectifier circuit, configured to rectify an AC input power supply to generate a DC bus voltage;
a DC converter coupled to a subsequent stage of the rectifier circuit and configured to receive the DC bus voltage and perform power conversion on the DC bus voltage to generate an output voltage or an output current for a load; and
a bidirectional DC converter, configured to raise a valley value of the DC bus voltage, to increase a time interval for which the DC bus voltage meets input voltage requirements of the DC converter.

In an example, the bidirectional DC converter is configured to ensure that the DC bus voltage is greater than a first threshold.

In an example, the first threshold is determined according to a minimum input voltage of the DC converter.

In an example, an output end of the rectifier circuit is connected to a first capacitor, and a first end of the bidirectional DC converter is connected to a common node of a non-grounding terminal of the first capacitor and an input end of the DC converter.

In an example, a second end of the bidirectional DC converter is connected to a second capacitor, and a capacitance of the second capacitor is greater than a capacitance of the first capacitor.

In an example, during at least part of a time interval for which the DC bus voltage is greater than the first threshold, the bidirectional DC converter is further configured to transfer power from an output end of the rectifier circuit to a second end of the bidirectional DC converter, where a first end of the bidirectional DC converter is connected to the output end of the rectifier circuit.

In an example, during a first time interval for which the DC bus voltage is greater than the first threshold, the bidirectional DC converter is further configured to transfer the power from the output end of the rectifier circuit to the second end of the bidirectional DC converter, where the first time interval is a time interval for which the DC bus voltage is greater than the first threshold and less than or equal to a peak of the DC bus voltage.

In an example, the first time interval starts at a time instant that is later than a delay time when the DC bus voltage is equal to the first threshold by a predetermined time interval, and ends at a time instant when the DC bus voltage reaches the peak.

In an example, the bidirectional DC converter stops operating during part of a time interval for which the DC bus voltage is greater than the first threshold.

In an example, the bidirectional DC converter stops operating during a second time interval for which the DC bus voltage is greater than the first threshold, where the second time interval starts at a time instant when a voltage of a second end of the bidirectional DC converter is equal to a second threshold and ends at a time instant when an absolute value of a voltage of the AC input power supply is less than the first threshold, and a first end of the bidirectional DC converter is connected to the output end of the rectifier circuit.

In an example, the bidirectional DC converter stops operating during a third time interval for which the DC bus voltage is greater than the first threshold, wherein the third time interval is a predetermined time interval, and the predetermined time interval starts at a time instant when the DC bus voltage is equal to the first threshold.

In an example, during a time interval for which an absolute value of a voltage of the AC input power supply is less than the first threshold, the bidirectional DC converter is further configured to transfer power from a second end of the bidirectional DC converter to an output end of the rectifier circuit, to ensure that the DC bus voltage is greater than the first threshold, where a first end of the bidirectional DC converter is connected to the output end of the rectifier circuit.

In the AC-DC power converter according to the present disclosure, a DC bus voltage can meet input voltage requirements of a subsequently connected DC converter by means of a bidirectional DC converter connected to a rectifier circuit, to increase a time interval for which the AC input power supply provides power to the subsequently connected DC converter, and reduce the requirements for capacity and a volume of a first capacitor in the rectifier circuit and capacity and a volume of a second capacitor connected to the second end of the bidirectional DC converter, so that a total volume of the capacitors connected at the subsequent stage of the rectifier bridge can be greatly reduced, to reduce a volume of the power converter, thereby improving the power density of the power converter.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
Figure 1 is a diagram of an AC-DC power converter according to the conventional technology;
Figure 2 is a diagram showing an operation waveform of an AC-DC power converter according to the conventional technology;
Figure 3 is a diagram of an AC-DC power converter according to the present disclosure;
Figure 4 is a diagram showing an operation waveform of an AC-DC power converter according to the present disclosure; and
Figure 5 is a diagram of a bidirectional DC converter according to an example of the present disclosure.

### DETAILED DESCRIPTION

The present disclosure is described below based on the following embodiments. However, the present disclosure is not limited to the embodiments. In the following description of the present disclosure, specific details are described in detail. Those skilled in the art can fully understand the present disclosure without the description of these details. Well-known methods, processes, flows, components and circuits are not described in detail to avoid obscuring the essence of the present disclosure.

In addition, those skilled in the art should understand that the drawings are provided herein for illustration, and are unnecessarily drawn to scale.

In addition, it should be understood that in the following description, the term "circuit" indicates a conductive loop formed by at least one element or sub-circuit through electrical connection or electromagnetic connection. When an element or circuit is described as "connected to" another element or when an element or circuit is described as "connected" between two nodes, the element or circuit may be directly coupled or connected to another element, or there is other element between the element or circuit and another element. The connection between elements may be physical, logical, or a combination thereof. In addition, when an element is described as "directly coupled" or "directly connected" to another element, there is no element between the element and another element.

Unless explicitly indicated herein, the words "including", "comprising" and the like in the specification and the claims, should be interpreted as inclusive rather than exclusive or exhaustive, that is, "including but not limited to".

In the description of the present disclosure, it should be understood that, the terms "first", "second" and the like are used only for illustrative and cannot be construed as indicating or implying relative importance. In addition, in the description of the present disclosure, the term "multiple" or "a plurality of" indicates two or more unless otherwise specified.

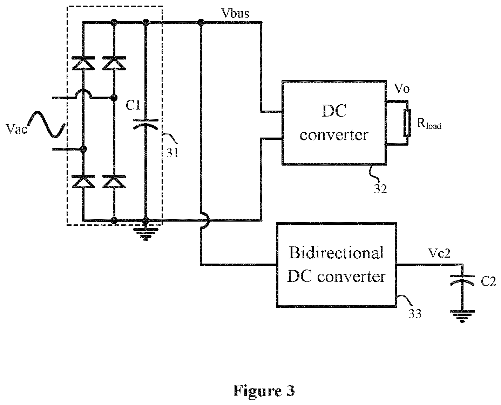

Figure 3 is a diagram of an AC-DC power converter according to the present disclosure. As shown in Figure 3, the AC-DC power converter includes a rectifier circuit 31, a DC converter 32 and a bidirectional DC converter 33. The rectifier circuit 31 is configured to rectify an AC input power supply Vac to output a DC bus voltage Vbus. The DC converter 32 is connected in parallel between a positive output terminal and a negative output terminal of the rectifier circuit 31, and is connected at a subsequent stage of the rectifier circuit 31. The DC converter 32 is configured to receive the DC bus voltage Vbus and perform power conversion on the DC bus voltage Vbus to generate an output voltage Vo or an output current Io for a load R_{load}. The bidirectional DC converter 33 is configured to raise a valley value of the DC bus voltage Vbus, that is, to increase an amplitude of the DC bus voltage Vbus when the DC bus voltage Vbus is at a valley bottom, so as to increase a time interval for which the DC bus voltage Vbus meets input voltage requirements of the DC converter 32.

In an example, the rectifier circuit 31 may be an integrated rectifier bridge or a rectifier formed by multiple discrete devices. The rectifier circuit 31 may be configured to perform synchronous rectification on a connected AC input power supply. It should be understood that the "grounding" described in the examples herein refers to connecting to a low potential reference terminal of a circuit rather than connecting to the actual earth (that is, a zero potential of the earth). For example, if a negative pole of the power supply serves as the low potential reference terminal, the "grounding" refers to connecting to the negative pole of the power supply.

In the present disclosure, an output end of the rectifier circuit 31 is connected in parallel with a first capacitor C1 with a small capacitance and a small volume. A first end of the bidirectional DC converter 33 is connected to a common node of a non-grounding terminal of the first capacitor C1 and an input end of the DC converter 32. A second end of the bidirectional DC converter 33 is connected to a second capacitor C2. The capacitance of the second capacitor C2 is greater than the capacitance of the first capacitor C1, and a sum of a volume of the first capacitor C1 and a volume of the second capacitor C2 is less than the volume of the capacitor C connected at the output end of the rectifier bridge (shown in Figure 1) according to the conventional technology. In the AC-DC power converter according to the present disclosure, the first capacitor C1 is not required to have a large capacitance to meet the requirements of the DC bus voltage under a low AC input voltage and full-load. In a case that an absolute value of a voltage of the AC input power supply Vac is small, the bidirectional DC converter 33 transfers power from the second end of the bidirectional DC converter 33 to the first end of the bidirectional DC converter 33, that is, to the output end of the rectifier circuit 31, to ensure that the DC bus voltage Vbus is greater than a high voltage threshold, so that the volume of the capacitor can be reduced and the power density of the AC-DC power converter can be improved.

The bidirectional DC converter 33 is a bidirectional converter to transfer power in two directions. In a case that the first end of the bidirectional DC converter 33 serves as an input end, that is, the DC bus voltage Vbus is a voltage at the input end, and the second end of the bidirectional DC converter 33 serves as an output end, the bidirectional DC converter 33 transfers power from a DC bus to the second capacitor C2, which is defined as that the bidirectional DC converter 33 operates in a forward direction. In a case that the second end of the bidirectional DC converter 33 serves as the input end, that is, a voltage Vc2 of the second capacitor C2 is the voltage of the input end, and the first end of the bidirectional DC converter 33 serves as the output end, the bidirectional DC converter 33 transfers power from the second capacitor C2 to the DC bus, that is, to the first capacitor C1, which is defined as that the bidirectional DC converter 33 operates in a reverse direction.

It should be noted that in a case that the bidirectional DC converter 33 operates in the forward direction, in an example, the output voltage of the bidirectional DC converter 33 may be controlled in a closed loop. The voltage of the second end of the bidirectional DC converter 33, that is, a reference voltage of the voltage Vc2 of the second capacitor C2 is equal to a second threshold Vth2, so that the voltage Vc2 of the second capacitor C2 is close to the second threshold Vth2 by adopting the closed loop. In another example, hysteresis control for the output voltage of the bidirectional DC converter 33 may be adopted. The bidirectional DC converter 33 stops operating when the voltage Vc2 of the second capacitor C2 increases to a third threshold Vth3, and the bidirectional DC converter 33 starts to operate again when the voltage Vc2 of the second capacitor C2 decreases to the second threshold Vth2, so that the voltage Vc2 of the second capacitor C2 is greater than or equal to the second threshold Vth2 and less than or equal to the third threshold Vth3. The third threshold Vth3 is greater than the second threshold Vth2.

In a case that the bidirectional DC converter 33 operates in the reverse direction, in an example, the output voltage of the bidirectional DC converter 33 may be controlled in a closed loop. The voltage of the first end of the bidirectional DC converter 33, that is, a reference voltage of the DC bus voltage Vbus of the first capacitor C1 is equal to a first threshold Vth1, so that the DC bus voltage Vbus is close to the first threshold Vth1 by adopting the closed loop. In another example, hysteresis control may be adopted for the output voltage of the bidirectional DC converter 33. The bidirectional DC converter 33 stops operating when the DC bus voltage Vbus increases to a fourth threshold Vth4, and the bidirectional DC-DC converter 33 starts to operate again when the DC bus voltage Vbus decreases to the first threshold Vth1, so that the DC bus voltage Vbus is greater than or equal to the first threshold Vth1 and less than or equal to the fourth threshold Vth4. The fourth threshold Vth4 is greater than the first threshold Vth1.

Compared with the conventional technical solution, in the technical solutions according to the present disclosure, a time interval for which the AC input power supply Vac provides power to the subsequently connected DC converter 32 is increased, and the requirements for the capacity and volume of the first capacitor C1 and the second capacitor C2 connected at the subsequent stage of the rectifier bridge are reduced, so as to greatly reduce a total volume of the capacitors connected at the subsequent stage of the rectifier bridge, to reduce the volume of the power converter, thereby improving the power density of the power converter.

During at least part of a time interval for which the DC bus voltage Vbus is greater than the first threshold Vth1, the bidirectional DC converter 33 transfers power from the first end of the bidirectional DC converter 33 to the second end of the bidirectional DC converter 33, that is, operates in the forward direction. The first threshold Vth1 is determined according to a minimum input voltage of the DC converter 32. The bidirectional DC converter 33 transfers power from the second end of the bidirectional DC converter 33 to the first end of the bidirectional DC converter 33 during a fourth time interval T4, and the fourth time interval T4 starts at a time instant when the absolute value of the voltage of the AC input power supply Vac decreases to the first threshold Vth1 and ends at a time instant when the absolute value of the voltage of the AC input power supply Vac increases to the first threshold Vth1, so that the DC bus voltage Vbus is greater than the first threshold Vth1 to meet requirements of the minimum input voltage of the DC converter 32.

Further, the bidirectional DC converter 33 transfers power from the output end of the rectifier circuit 31 to the second end of the bidirectional DC converter 33 during a first time interval T1 for which the DC bus voltage Vbus is greater than the first threshold Vth1, so that the voltage Vc2 of the second capacitor C2 is increased to the second threshold Vth2. The first time interval T1 is a time interval for which the DC bus voltage Vbus is greater than the first threshold Vth1 and less than or equal to a peak of the DC bus voltage, that is, the first time interval T1 starts at a time instant later than a time instant when the DC bus voltage Vbus is equal to the first threshold Vth1, and ends at a time instant earlier than or equal to a time instant when the DC bus voltage Vbus is equal to the peak. The first time interval T1 is all or part of a time interval between a starting time instant and an ending time instant.

Further, the first time interval T1 starts at a time instant that is later than a delay time when the DC bus voltage is equal to the first threshold Vth1 by a predetermined time interval Tth, and ends at a time instant when the DC bus voltage reaches the peak.

Further, the bidirectional DC converter 33 stops operating during part of the time interval for which the DC bus voltage Vbus is greater than the first threshold Vth1.

Further, the bidirectional DC converter 33 stops operating during a second time interval T2 for which the DC bus voltage Vbus is greater than the first threshold Vth1. The second time interval T2 starts at a time instant when the voltage of the second end of the bidirectional DC converter 33, that is, the voltage Vc2 of the second capacitor C2 is equal to the second threshold Vth2, and ends at a time instant when the absolute value of the voltage of the AC input power supply Vac is less than the first threshold Vth1.

Further, the bidirectional DC converter 33 stops operating during a third time interval T3 for which the DC bus voltage Vbus is greater than the first threshold Vth1. The third time interval T3 is a predetermined time interval Vth, and the predetermined time interval starts at a time instant when the DC bus voltage is equal to the first threshold. It should be noted that in some examples, the third time interval T3 may not exist, the bidirectional DC converter 33 operates in the forward direction during the third time interval T3, and the above first time interval T1 includes the third time interval T3.

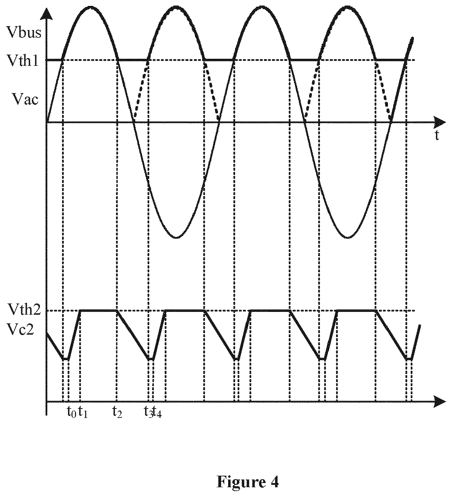

Figure 4 is a diagram showing an operation waveform of an AC-DC power converter according to the present disclosure. The operation process and operation principle of the AC-DC power converter according to the present disclosure are described in detail below in combination with Figure 4.

During a time interval [t0, t1] from a time instant t0 to a time instant t1, that is, the first time interval T1, the rectifier bridge in the rectifier circuit 31 is turned on, and the DC bus voltage Vbus changes with the absolute value of the voltage of the AC input power supply Vac. The bidirectional DC converter 33 operates in the forward direction to transfer power from the DC bus to the second capacitor C2, so that the voltage Vc2 of the second capacitor C2 increases. During the time interval, the first capacitor C1 and the AC input power supply Vac provide power to the subsequently connected DC converter 32.

During a time interval [t1, t2] from the time instant t1 to a time instant t2, that is, the second time interval T2, the DC bus voltage Vbus changes with the absolute value of the voltage of the AC input power supply Vac due to the first capacitor C1 with a small capacitance, and the rectifier bridge in the rectifier circuit 31 is turned on. In such case, the voltage Vc2 of the second capacitor C2 is charged to the second threshold Vth2, the bidirectional DC converter 33 stops operating, and the voltage Vc2 of the second capacitor C2 is unchanged. During the time interval, the first capacitor C1 and the AC input power supply Vac provide power to the subsequently connected DC converter 32.

During a time interval [t2, t3] from the time instant t2 to a time instant t3, that is, the fourth time interval T4, the bidirectional DC converter 33 transfers power from the second capacitor C2 to the DC bus. In such case, the absolute value of the voltage of the AC input power supply Vac is less than the reference voltage at the first end of the bidirectional DC converter 33, that is, the first threshold Vth1. Therefore, in an example, the bidirectional DC converter 33 operates in a closed loop to control the DC bus voltage Vbus to maintain at the first threshold Vth1, the voltage Vc2 of the second capacitor C2 decreases and the rectifier circuit 31 is turned off. During the time interval, the first capacitor C1 and the second capacitor C2 provide power to the subsequently connected DC converter 32.

During a time interval [t3, t4] from the time instant t3 to a time instant t4, that is, the third time interval T3, the absolute value of the voltage of the AC input power supply Vac is greater than the reference voltage at the first end of the bidirectional DC converter 33, that is, the first threshold Vth1, the rectifier bridge in the rectifier circuit 31 is turned on, and the DC bus voltage Vbus changes with the absolute value of the voltage of the AC input power supply Vac. The bidirectional DC converter 33 stops operating, and the voltage Vc2 of the second capacitor C2 is unchanged. During the time interval, the first capacitor C1 and the AC input power supply Vac provide power to the subsequently connected DC converter 32.

It can be seen that compared with the conventional technical solution, in the technical solutions according to the present disclosure, the DC bus voltage can meet the input voltage requirements of the subsequently connected DC converter 32 by means of the bidirectional DC converter 33 connected to the rectifier circuit 31, to increase the time interval for which the AC input power supply Vac provides power to the subsequently connected DC converter 32, and reduce the requirements for the capacity and volume of the first capacitor C1 in the rectifier circuit and the capacity and volume of the second capacitor C2 connected to the second end of the bidirectional DC converter 33, so that a total volume of the capacitors connected at the subsequent stage of the rectifier bridge can be greatly reduced, to reduce a volume of the power converter, thereby improving the power density of the power converter.

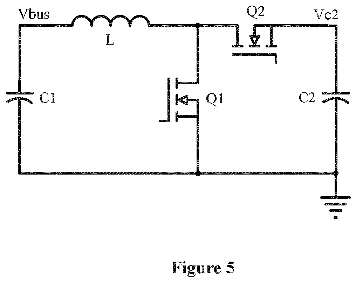

Figure 5 is a diagram of a bidirectional DC converter according to an example of the present disclosure. For example, the bidirectional DC converter 33 is a bidirectional BOOST converter. The bidirectional BOOST converter includes an inductor L, a first switching transistor Q1, a second switching transistor Q2 and a second capacitor C2. A first end of the bidirectional BOOST converter receives the DC bus voltage Vbus, and the bidirectional BOOST converter operates in the forward direction, to convert the DC bus voltage Vbus at the first end of the bidirectional BOOST converter to the voltage Vc2 of the second capacitor C2. The bidirectional BOOST converter operates in the reverses direction, to convert the voltage Vc2 of the second capacitor C2 connected to the second end of the bidirectional BOOST converter to the DC bus voltage Vbus. The bidirectional BOOST converter includes an inductor L, a first switching transistor Q1, a second switching transistor Q2 and a second capacitor C2. It should be noted that the bidirectional DC converter 33 may be any one of a bidirectional DC/DC topology, such as a bidirectional BUCK converter topology, a bidirectional CUK converter topology and a bidirectional BUCK-BOOST converter topology.

The foregoing are merely preferred embodiments of the present disclosure and are not intended to limit the present disclosure, and those skilled in the art can make various modifications and variations to the present disclosure. Any modifications, equivalent substitutions and improvements made within the principle of the present disclosure are within the protection scope of the present disclosure.

## Claims

1. An AC-DC power converter, comprising:
a rectifier circuit, configured to rectify an AC input power supply to generate a DC bus voltage;
a DC converter, coupled to a subsequent stage of the rectifier circuit and configured to receive the DC bus voltage and perform power conversion on the DC bus voltage to generate an output voltage or an output current for a load; and
a bidirectional DC converter, configured to raise a valley value of the DC bus voltage, to increase a time interval for which the DC bus voltage meets input voltage requirements of the DC converter.

2. The AC-DC power converter according to claim 1, wherein the bidirectional DC converter is configured to ensure that the DC bus voltage is greater than a first threshold.

3. The AC-DC power converter according to claim 2, wherein the first threshold is determined according to a minimum input voltage of the DC converter.

4. The AC-DC power converter according to claim 1, wherein an output end of the rectifier circuit is connected to a first capacitor, and a first end of the bidirectional DC converter is connected to a common node of a non-grounding terminal of the first capacitor and an input end of the DC converter.

5. The AC-DC power converter according to claim 4, wherein a second end of the bidirectional DC converter is connected to a second capacitor, and a capacitance of the second capacitor is greater than a capacitance of the first capacitor.

6. The AC-DC power converter according to claim 2, wherein during at least part of a time interval for which the DC bus voltage is greater than the first threshold, the bidirectional DC converter is further configured to:
transfer power from an output end of the rectifier circuit to a second end of the bidirectional DC converter, wherein a first end of the bidirectional DC converter is connected to the output end of the rectifier circuit.

7. The AC-DC power converter according to claim 6, wherein during a first time interval for which the DC bus voltage is greater than the first threshold, the bidirectional DC converter is further configured to:
transfer the power from the output end of the rectifier circuit to the second end of the bidirectional DC converter, wherein the first time interval is a time interval for which the DC bus voltage is greater than the first threshold and less than or equal to a peak of the DC bus voltage.

8. The AC-DC power converter according to claim 7, wherein the first time interval starts at a time instant that is later than a delay time when the DC bus voltage is equal to the first threshold by a predetermined time interval, and ends at a time instant when the DC bus voltage reaches the peak.

9. The AC-DC power converter according to claim 2, wherein the bidirectional DC converter stops operating during part of a time interval for which the DC bus voltage is greater than the first threshold.

10. The AC-DC power converter according to claim 9, wherein the bidirectional DC converter stops operating during a second time interval for which the DC bus voltage is greater than the first threshold;
wherein the second time interval starts at a time instant when a voltage of a second end of the bidirectional DC converter is equal to a second threshold and ends at a time instant when an absolute value of a voltage of the AC input power supply is less than the first threshold, and a first end of the bidirectional DC converter is connected to the output end of the rectifier circuit.

11. The AC-DC power converter according to claim 9, wherein the bidirectional DC converter stops operating during a third time interval for which the DC bus voltage is greater than the first threshold;
wherein the third time interval is a predetermined time interval, and the predetermined time interval starts at a time instant when the DC bus voltage is equal to the first threshold.

12. The AC-DC power converter according to claim 2, wherein during a time interval for which an absolute value of a voltage of the AC input power supply is less than the first threshold, the bidirectional DC converter is further configured to:
transfer power from a second end of the bidirectional DC converter to an output end of the rectifier circuit, to ensure that the DC bus voltage is greater than the first threshold, wherein a first end of the bidirectional DC converter is connected to the output end of the rectifier circuit.
